# EUROPEAN PATENT SPECIFICATION

(11) **EP 2 927 524 B1**
(45) Date of publication and mention of the grant of the patent: **03.01.2018**
(21) Application number: 13875836.2
(22) Date of filing: 21.02.2013
(51) Int. Cl.: F16C 35/077

(54) **BEARING STRUCTURE AND WIND POWER GENERATION DEVICE**
TRÄGERSTRUKTUR UND WINDKRAFTGENERATOR
STRUCTURE DE PALIER ET DISPOSITIF DE GÉNÉRATION D'ÉNERGIE ÉOLIENNE

(43) Date of publication of application: 07.10.2015
(73) Proprietor: Mitsubishi Heavy Industries, Ltd., Tokyo 108-8215 (JP)
(72) Inventor: NODA, Yoshitomo, Tokyo 108-8215 (JP); NISHIDA, Hideaki, Tokyo 108-8215 (JP); NUMAJIRI, Tomohiro, Tokyo 108-8215 (JP); YUGE, Atsushi, Tokyo 108-8215 (JP); SEKI, Seita, Tokyo 108-8215 (JP)
(74) Representative: Intès, Didier Gérard André
(86) International application number: PCT/JP2013/054326
(87) International publication number: WO 2014/128879

(56) References cited:
- EP-A2- 0 287 309
- EP-A2- 2 045 464
- GB-A- 2 421 987
- JP-A- H06 304 616
- JP-A- 2003 314 562
- JP-A- 2004 069 062
- JP-A- 2004 190 765
- JP-A- 2005 337 267
- JP-A- 2007 211 820
- JP-A- 2008 196 555
- JP-A- 2008 196 555
- JP-A- 2008 527 259
- JP-A- 2009 024 833
- JP-A- 2011 163 420

## Description

### Technical Field

The present invention relates to a bearing structure, such as a bearing for a main shaft of, for example, a wind power generation, which supports a shaft portion of a rotor and a wind turbine generator.

### Background Art

Hitherto, generally, in a bearing structure which is used for, for example, a bearing for a main shaft of a wind turbine generator, a shaft is supported by single or a plurality of bearings disposed in a shaft direction.

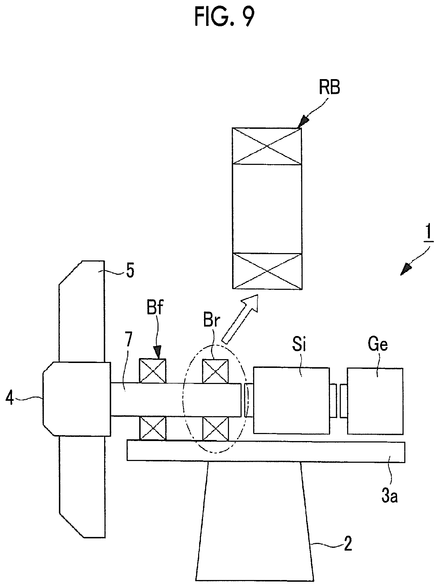

In a wind turbine generator 1 illustrated in Fig. 9, a rotor head 4 is rotated by a wind turbine blade 5 receiving wind power, on a front-end portion side of a nacelle provided in an upper end of a prop 2. A plurality of wind turbine blades 5 are provided in the rotor head 4 and the rotor head 4 is connected to a tip of a main shaft 7. Furthermore, in Fig. 9, a reference numeral and a letter 3a indicates a nacelle base plate, Si indicates a speed increasing, and Ge indicates a generator.

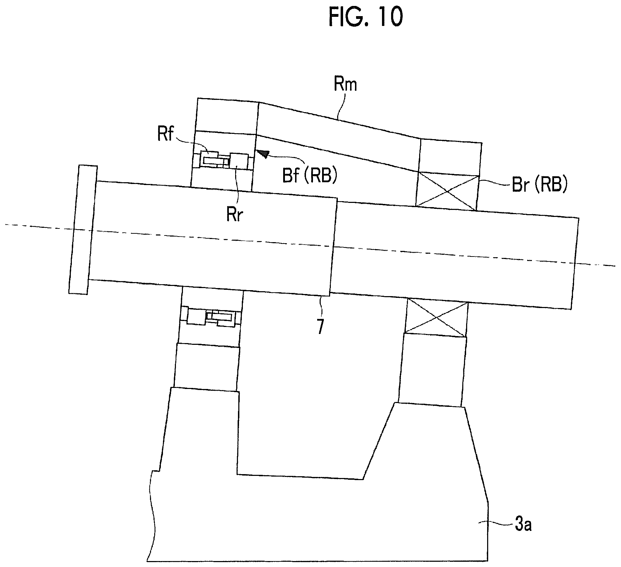

A multiple-row support structure (in other words, a two-point support structure) in which a pair of front and rear roller bearings RB disposed in an shaft direction are used as a front-side bearing Bf and a rear-side bearing Br is applied to the bearing structure of the main shaft 7 described above, as illustrated in, for example, Figs. 9 and 10. An outer ring side of the roller bearing RB illustrated in the accompanying drawings is fixed and supported by, for example, the nacelle base plate 3a. The roller bearing RB is a multiple-row roller bearing which includes, as a rolling element, the front-side roller Rf and the rear-side roller Rr.

A generator is connected to a rear end portion side (that is, the other end) of the main shaft 7. Such a generator includes a generation type in which the generator Ge is driven via a speed increasing of, for example, a mechanical type or a hydraulic type and a generation type in which a generator is directly driven.

Furthermore, in Fig. 10, a reference letter Rm indicates a reinforcement member which connects the front-side bearing Bf and the rear-side bearing Br. The reinforcement member is a member provided as needed.

A technology relating to a roller bearing which can support an axial load with an aligning function and, further, can be configured to have a compact size in a shaft direction is disclosed in PTL 1 described below.

Furthermore, a technology in which, in a main bearing portion of a wind turbine generator, damage to a rolling element due to idling of a wind turbine during power failure in which an oil feeding pump cannot be used is prevented is disclosed in PTL 2 described below. PTL 3 presents another example of bearing structure according to the preamble of claims 1 and 2.

### Citation List

### Patent Literature

[PTL 1] PCT Japanese Translation Patent Publication No. 2009-038184
[PTL 2] PCT Japanese Translation Patent Publication No. 2010-018630
[PTL 3] European patent application EP 0287309

### Summary of Invention

### Technical Problem

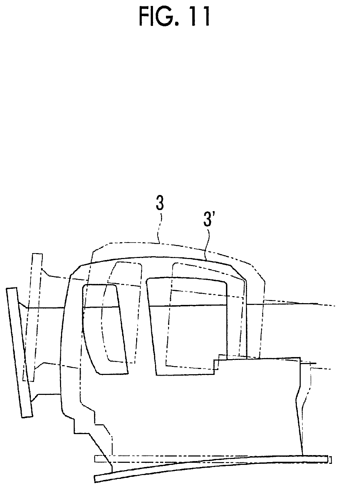

Meanwhile, in the bearing structure applied to, for example, the main shaft 7 of the wind turbine generator 1 described above, when the bearing structure receives input from the main shaft 7 connecting, for example, a hub which rotates with the wind turbine blade 5, the bearing structure receives an influence which may cause the structure of a bearing support portion or a nacelle structure itself to be deformed. In, for example, the main shaft 7 of the wind turbine generator 1, a radial load directed downward in the radial direction acts on a central position of the hub, by rotation of the wind turbine blade 5. Accordingly, as shown in an image view illustrated in Fig. 11, the nacelle 3 which supports the bearing is deformed as follows. A tip portion side of the nacelle 3, which is close to the central position of the hub, is deformed downward, from a normal state illustrated by an imaginary line to a state of a nacelle 3' illustrated by a solid line.

Such a structure deformation of the nacelle 3 also influences the bearing. In other words, when influence of the structure deformation affects the bearing, a load generated in the inner portion of the bearing is significantly different from theoretical load distribution or theoretical load sharing. As a result, this also influences the bearing performance. Furthermore, in a multiple-row support structure where the main shaft 7 is supported by the front-side bearing Bf and the rear-side bearing Br, the front-side bearing Bf close to a load application position receives greater influence.

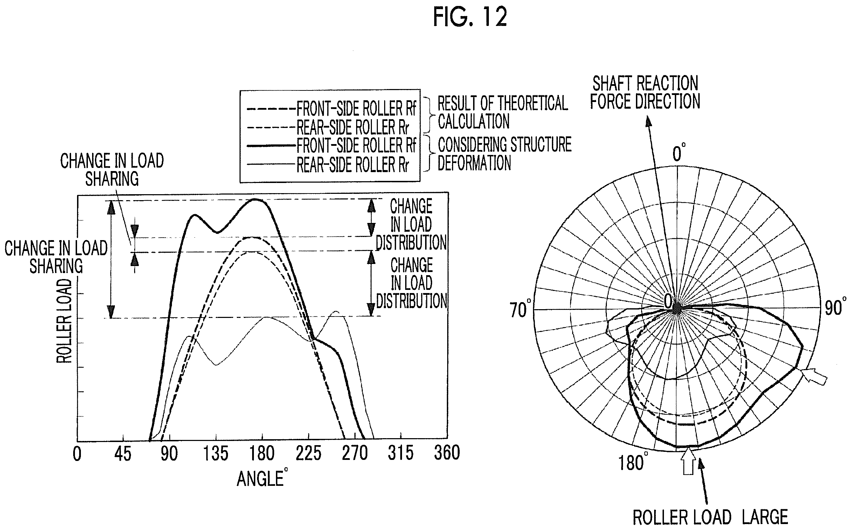

Hereinafter, the detail of change in load sharing, which is generated in the inner portion of the bearing, will be described with reference to a load distribution view of a bearing roller, which is illustrated in Fig. 12.

The left side of the paper of Fig. 12 illustrates a case where, in a multiple-row support structure constituted of a front-side bearing Bf and a rear-side bearing Br, the front-side bearing Bf is a multiple-row roller bearing constituted of a front-side roller Rf and a rear-side roller Rr. The dashed line in the accompanying drawing shows a roller load of the front-side roller Rf and the rear-side roller Rr, which is obtained by a theoretical calculation. The solid line in the accompanying drawing shows the roller load (in other words, analyzed rolling element load) in consideration of structure deformation.

In this case, a horizontal axis is an "angle (in which an upper side in a vertical direction of a rotation axis is 0 degrees)" in a blade rotation direction when seen from a front side and a vertical axis is the "roller load (kgf)". Thick lines of both the solid line and the dashed line illustrate values of the front-side roller Rf and thin lines thereof illustrate values of the rear-side roller Rr. In addition, load distribution in a cross-sectional surface in a direction perpendicular to an axis line is illustrated on a right side of the paper of Fig. 12.

In the roller load by a theoretical calculation, the peak of the roller load is located in a range (which is the range on a lower side of the bearing) of about 180 degrees and the front-side roller Rf and the rear-side roller Rr are substantially equalized in terms of load sharing, as can be understood from Fig. 12. However, in an analyzed rolling element load in consideration of structure deformation, large change is observed in load distribution. Furthermore, a peak value of the roller load of the front-side roller Rf is increased compared to the calculated theoretical value. Thus, the peak value of the load of the rear-side roller Rr is reduced compared to the calculated theoretical value.

As a result, in a case considering structure deformation, the carrying rate of the front-side roller Rf is significantly increased in load sharing between the front-side roller Rf and the rear-side roller Rr.

Such load distribution and load sharing is not preferable in that a life span of the roller bearing BR, such as a multiple-row roller bearing, is reduced to, for example, about 60% of a normal life span. Accordingly, to prevent or suppress reduction in the life span of a bearing, it is necessary to improve distribution of a load acting on rolling elements, such as rolling elements disposed on, for example, a front side and a rear side, disposed in multiple rows in the shaft direction and load sharing in respective rows.

Furthermore, such a problem in relation to reduction in the life span of the bearing is not limited to a roller bearing in which a plurality of rolling elements are disposed in the shaft direction. The problem also occurs in, for example, a roller bearing in which rolling elements of a single row are provided.

The invention is made in view of the above circumstance. An object of the invention is to equalize a load carried by the rolling elements disposed in respective rows and reduce a peak value of the acting load in a bearing structure, such as a bearing structure using a roller bearing including rolling elements of multiple rows in the shaft direction and a bearing structure using two roller bearings, each of which includes rolling elements of a single row, in which a shaft tip side receives a radial load and a portion in the shaft direction is supported by the rolling elements of multiple rows.

In addition, an object of the invention is to provide a wind turbine generator including a bearing structure in which a load carried by the rolling elements disposed in respective rows can be equalized and a peak value of the acting load can be reduced.

### Solution to Problem

To solve the problem described above, a bearing structure as defined in claim 1 is provided. A bearing structure of a first aspect according to the invention is a bearing structure in which a shaft tip side receives a radial load and which is supported by a plurality of rolling elements of multiple rows aligned in a shaft direction, which are provided in a circumferential direction in a state where the rolling elements are interposed between an inner ring and an outer ring, in which, in a bearing back surface region in which a value of an analyzed rolling element load in consideration of deformation of the bearing structure is greater than a calculated theoretical value in which no structure deformation is considered, a rigidity-adjusting section which causes support rigidity in a radial direction from a bearing center to be further reduced in a region to which a greater analyzed rolling element load is applied is provided.

According to such a bearing structure, in the bearing back surface region in which the analyzed rolling element load in consideration of deformation of the bearing structure is greater than the calculated theoretical value in which no structure deformation is considered, the rigidity-adjusting section which causes the support rigidity in the radial direction from the bearing center to be further reduced in the region to which the greater analyzed rolling element load is applied is provided. Accordingly, the support rigidity in the radial direction from the bearing center is reduced in the vicinity of a position at which the radial load acting on the rolling element has a peak value, and thus the load can be distributed over the vicinity of the position. As a result, the peak value of the radial load is reduced, and thus the load carried by the rolling element disposed in respective rows can be equalized.

According to a non-claimed embodiment, the rigidity-adjusting section is a sleeve which is formed of a material of which a Young's modulus is lower than that of a bearing housing and is fitted to a portion between the bearing housing and the outer ring. In addition, it is preferable that a thickness of the sleeve in the radial direction is changed in the shaft direction and the circumferential direction, in accordance with the analyzed rolling element load, in such a manner that support rigidity is adjusted. Accordingly, in a part of the sleeve, in which the thickness of the sleeve in the radial direction is large, the support rigidity in the radial direction from the bearing center is reduced, and thus the load can be distributed over the vicinity thereof. In this case, a preferable boundary line between the sleeve and the bearing housing is a line which is adjusted such that the rigidity is smoothly changed.

For example, a resin, a casting, an aluminum alloy, and a copper alloy can be exemplified as a preferable material of the sleeve, of which the Young's modulus is lower than that of the bearing housing.

According to a non-claimed embodiment, the rigidity-adjusting section is a gap portion which is formed in the bearing housing. In addition, it is preferable that the ratio of a space to a cross-sectional surface of the bearing housing in the radial direction is changed in the shaft direction and the circumferential direction, in accordance with the analyzed rolling element load, in such a manner that the support rigidity is adjusted. Accordingly, in a portion in which the ratio of the space to the cross-sectional surface of the bearing housing in the radial direction is large, the support rigidity in the radial direction from the bearing center is reduced, and thus the load can be distributed over the vicinity thereof.

In the bearing structure described above, the rigidity-adjusting section is a shim which is formed of a material of which a Young's modulus is lower than that of a bearing housing and is fitted to a portion between the bearing housing and a bearing housing support member. In addition, a thickness of the shim in the radial direction is changed in the shaft direction and in the circumferential direction, in accordance with the analyzed rolling element load, in such a manner that the support rigidity is adjusted. Accordingly, in a portion in which the thickness of the shim in the radial direction is large, the support rigidity in the radial direction from the bearing center is reduced, and thus the load can be distributed over the vicinity thereof.

For example, a resin, a casting, an aluminum alloy, and a copper alloy can be exemplified as a preferable material of the shim, of which the Young's modulus is lower than that of the bearing housing and the rigidity is low.

In the bearing structure described above, it is preferable that the rigidity-adjusting section is a load transfer member which fills up a space portion which is formed in a portion between the bearing housing and a bearing housing support member. In addition, it is preferable that the load transfer member is provided on a rolling element row side in which the analyzed rolling element load is large, in such a manner that the support rigidity is adjusted. Accordingly, the support rigidity in the radial direction from the bearing center is increased in the rolling element row side in which the space portion is filled with the load transfer member and the analyzed rolling element load is small. Thus, a difference in the load carried by respective rolling element rows can be reduced.

A bearing structure of a second aspect according to the invention is a bearing structure in which a shaft tip side receives a radial load and which is supported by a plurality of rolling elements of multiple rows aligned in a shaft direction, which are provided in a circumferential direction in a state where the rolling elements are interposed between an inner ring and an outer ring, in which at least one of a diameter of the rolling element, an outer diameter of the inner ring, and an inner diameter of the outer ring is selected and changed, in such a manner that a bearing radial gap is adjusted for each row of the rolling elements and a value of the bearing radial gap is set to be smaller in a row in which a grater load acts on the rolling elements.

According to a non-claimed embodiment, at least one of the diameter of the rolling element, the outer diameter of the inner ring, and the inner diameter of the outer ring is selected and changed, in such a manner that the bearing radial gap is adjusted for each row of the rolling element. In addition, the value of the bearing radial gap is set to be smaller in the row in which the grater load acts on the rolling elements, and thus the rolling elements in a row of which the gap is small receive a load before the rolling element in a row of which the gap is a large receive load. As a result, in the row which receives the load and has a relatively small gap, the rolling element is elastically deformed by only the amount filling a difference in the gap, and then the rolling element in the row having a relatively large gap also receives the load. Thus, load distribution in relation to the rolling element rows in the shaft direction is improved.

In a wind turbine generator of the invention, at least one of a main bearing which supports rotation of a rotor head including a plurality of wind turbine blades, a pitch bearing which supports the wind turbine blade and can change a pitch angle, and a yaw bearing which supports a nacelle and can change a yaw angle has the bearing support structure according to any one of Claims 1 to 6.

According to such a wind turbine generator, the wind turbine generator includes the bearing support structure according to any one of Claims 1 to 2. Accordingly, the load carried by the rolling elements disposed in respective rows is equalized and the peak value of the acting load is reduced, and thus reduction in the life span of the bearing is prevented or suppressed in the wind turbine generator.

### Advantageous Effects of Invention

According to the bearing structure and the wind turbine generator of the invention, the bearing structure in which a shaft tip side receives the radial load and which is supported, in a shaft direction, by rolling elements of multiple rows equalizes the load carried by the rolling elements disposed in respective rows, in such a manner that the bearing structure can reduce a peak value of the acting load. As a result, it is possible to prevent or suppress reduction in the life span of the bearing, in relation to a normal life span.

Furthermore, in the wind turbine generator to which the bearing structure of the invention is applied, load carried by the rolling elements disposed in respective rows are equalized and, further, the peak value of the acting load is reduced by the bearing structure. As a result, the wind turbine generator includes the bearing structure which prevents or suppresses reduction in the life span of the bearing.

### Brief Description of Drawings

Fig. 1A is a longitudinal sectional view (which is a cross-sectional view taken along a line B-B of Fig. 1B) of a first embodiment of a bearing structure, in which a longitudinal direction is a direction perpendicular to an axis line.
Fig. 1B is a cross-sectional view taken along a line A-A of Fig. 1A.
Fig. 2 is a longitudinal sectional view of a bearing structure having a multiple-row support structure including the bearing structure illustrated in Figs. 1A and 1B, in which a longitudinal direction is an axis-line direction.
Fig. 3 is an image view of a bearing structure illustrating a first modification example of the first embodiment illustrated in Figs. 1A and 1B, in which a longitudinal sectional view corresponding to Fig. 1A is illustrated on a left side of the paper and a longitudinal sectional view corresponding to Fig. 1B is illustrated on a right side of the paper.
Fig. 4 is a configuration view illustrating a principal portion of a bearing support structure, as a second modification example of the first embodiment illustrated in Figs. 1A and 1B.
Fig. 5 is a configuration view illustrating a principal portion of a bearing support structure, as a third modification example of the first embodiment illustrated in Figs. 1A and 1B.
Fig. 6 is an explanatory view illustrating a second embodiment of the bearing structure, in which a general example (in other words, an example of the related art) and the embodiment (of the invention) are illustrated side by side.
Fig. 7 is a view in which, in relation to the second embodiment illustrated in Fig. 6, a load is shown in a horizontal axis, gaps δ and deformation amounts Δ of a front-side roller and a rear-side roller are shown in a vertical axis, an upper stage illustrates a normal state, and a lower stage illustrates a state of the embodiment.
Fig. 8 is a side view illustrating a principal portion of a wind turbine generator.
Fig. 9 is a schematic configuration view of a multiple-row support structure in which a main shaft of the wind turbine generator is supported by a pair of front and rear roller bearings.
Fig. 10 is an enlarged view illustrating the multiple-row support structure illustrated in Fig. 9, which is shown as the related art of a bearing structure.
Fig. 11 is an image view which illustrates a deformed state of the nacelle 3 at the time of receiving a load in accordance with rotation of a wind turbine blade, in which a state not subjected to deformation is illustrated by an imaginary line and a state subjected to deformation is illustrated by a solid line.
Fig. 12 is a view in which, in relation to the multiple-row support structure illustrated in Fig. 10, load distribution of the bearing rollers is shown on a left side of the paper with an "angle" in a blade rotation direction, which is seen from a front side, as a horizontal axis and a "roller load" as a vertical axis and load distribution is shown on a right side of the paper using an cross-sectional illustration taken along a direction perpendicular to an axis line.

### Description of Embodiments

Hereinafter, an application example in relation to a wind turbine generator will be described with reference to the accompanying drawings, as an embodiment of a bearing structure according to the invention.

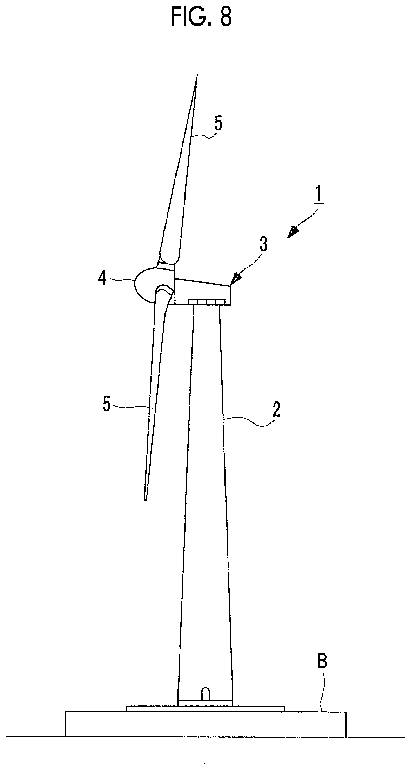

A wind turbine generator 1 illustrated in Fig. 8 has a prop (referred to also as a "tower") 2, a nacelle 3, and a rotor head 4. The prop 2 stands on a base B. The nacelle 3 is provided in an upper end of the prop 2. The rotor head 4 is provided in the nacelle 3 and the rotor head 4 is supported in a state where the rotor head 4 can rotate around a rotation axis line which is substantially horizontal. In a case where the wind turbine generator 1 is an offshore wind turbine, the wind turbine generator 1 may be either a floating type or a type in which the base B is provided on an ocean floor.

In the rotor head 4, a plurality (for example, three) of wind turbine blades 5 are provided radially around the rotation axis line. Accordingly, the force of wind which reaches the wind turbine blade 5, in a direction of the rotation axis line of the rotor head 4, is converted into power which causes the rotor head 4 to rotate around the rotation axis line.

### <First Embodiment>

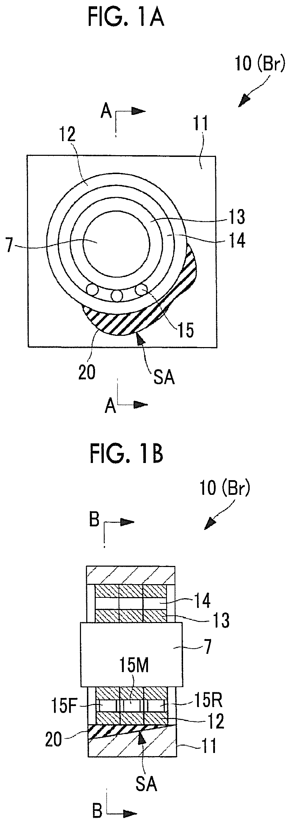

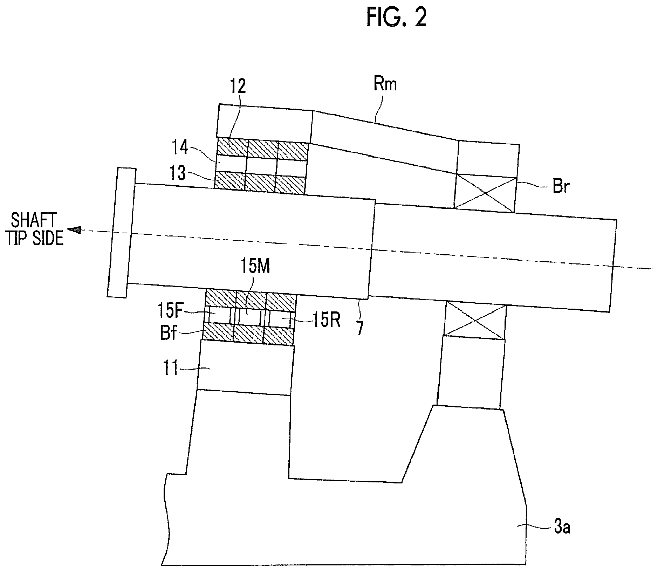

Hereinafter, a bearing structure which is applied to a main bearing for supporting a main shaft of the wind turbine generator 1 described above is exemplified. The detail of the bearing structure is described with reference to Figs. 1A, 1B, and 2.

The bearing structure illustrated in Fig. 2 is a multiple-row support structure (in other words, a two-point support structure) in which a pair of front and rear roller bearings RB disposed in an shaft direction are constituted of a front-side bearing Bf and a rear-side bearing Br. A radial load acts on a shaft tip side (which is located on the left side of the paper) of the main shaft 7.

The front-side bearing Bf illustrated in the accompanying drawing includes a plurality of rollers 15 which are provided in a bearing housing 11, as illustrated in Figs. 1A and 1B. In a space portion 14 formed in a portion between the outer ring 12 and the inner ring 13, the rollers 15 are disposed in a circumferential direction, at equal pitches.

In this case, the plurality of rollers 15 is rolling elements having a cylindrical shape, which are interposed between an outer ring 12 and an inner ring 13. Accordingly, a bearing 10 has a structure in which a bearing main body constituted of the outer ring 12, the inner ring 13, and the rollers 15 are accommodated in an inner portion of the bearing housing 11.

Furthermore, on the lower side of the outer ring 12, the bearing housing 11 of the bearing 10 described above is fixed and supported by a nacelle base plate 3a.

The bearing 10 illustrated in Fig. 1B is a multiple-row roller bearing which has a configuration in which the rollers 15 of three rows are aligned in the shaft direction, in other words, a configuration in which three bearing main bodies are aligned in the shaft direction and are accommodated in the bearing housing 11. However, the configuration is not limited thereto. The number of bearing main bodies may be one or two or more. In the following description, when it is necessary to distinguish the rollers 15 of three rows, the rollers are referred to as a front-side roller 15F, a middle roller 15M, and a rear-side roller 15R, in order from the shaft tip side of the main shaft 7, as illustrated in Figs. 1B and 2.

Furthermore, the radial load acting on the main shaft 7 of the wind turbine generator 1 acts in a downward direction, on the center position of a hub (not illustrated) which is connected to the tip of the main shaft 7, in the inner portion of the rotor head 4, and rotates with the wind turbine blade 5.

In the embodiment, the bearing 10 having a structure in which the plurality of rollers 15 are provided in the circumferential direction, in a state where the rollers 15 are interposed between the inner ring 13 and the outer ring 12 and the main shaft 7 is supported by the rollers 15 of multiple rows aligned in the shaft direction, a rigidity-adjusting section (which is the hatched portion of Figs. 1A and 1B) SA which causes support rigidity in the radial direction from a bearing center to be further reduced in a region to which a greater analyzed rolling element load is applied is provided in a bearing back surface region (normally, which is a region on the lower side of the bearing) in which the value of the analyzed rolling element load in consideration of deformation of the bearing structure is greater than a calculated theoretical value in which no structure deformation is considered, as described above.

The rigidity-adjusting section SA is substantially matched to the roller load distribution of the front-side roller Rf illustrated by a thick solid line, in the cross-sectional view of load distribution, taken along a direction perpendicular to the axis line, which is illustrated in Fig. 12, on the right side of the paper. In other words, the cross-sectional shape of the rigidity-adjusting section SA is set to be substantially similar to the shape of the analyzed rolling element load. In this drawing, 0 degree indicates the upper side of the bearing and 180 degrees indicates the lower side of the bearing. The value of a roller load is 0, at the position of the axis line, which is the center of concentric circles. The value of a roller load increases from the axis line position to the outside in any direction.

Specifically, a sleeve 20 which is formed of, for example, a material of which the Young's modulus is lower than that of the bearing housing 11 and is fitted to a portion between the bearing housing 11 and the outer ring 12 of the bearing main body is suitable as the rigidity-adjusting section SA of the embodiment. Since the bearing housing 11 is generally formed of cast iron (for example, FCD400), for example, a resin, a casting, an aluminum alloy, and a copper alloy, each of which has the Young's modulus lower than that of the cast iron are suitable as a preferable material of the sleeve 20.

When such a sleeve 20 is used, a thickness of the sleeve 20 in the radial direction is changed in the shaft direction and the circumferential direction, in accordance with the analyzed rolling element load, in such a manner that support rigidity is adjusted.

In other words, the thickness of the sleeve 20 is large on the shaft tip side in which the roller load is large due to influence of a radial load acting on the shaft tip side. The thickness of the sleeve 20 is gradually reduced as the sleeve 20 extends to a rear end side in the axis direction. In terms of the circumferential direction, the thickness of the sleeve 20 is large on the lower side of the bearing, in which the roller load is large. Such a sleeve 20 is provided in the rigidity-adjusting section SA. Accordingly, in a part (mainly, the lower side of the bearing) of the sleeve 20, in which the thickness of the sleeve 20 in the radial direction is large, the support rigidity in the radial direction from the bearing center is reduced because the Young's modulus of the material of the sleeve 20 is lower than that of the bearing housing 11.

As a result, in the bearing back surface region provided with the sleeve 20, the roller load can be distributed, due to rigidity reduction, over the vicinity of the bearing back surface region. In other words, the sleeve 20 having a large thickness is provided in a region on the lower side of the bearing, in which the peak load of the roller load is large. Accordingly, the ratio of a low rigidity member to the bearing housing 11 is increased in the radial direction, and thus the rigidity in the radial direction is reduced. Therefore, when the bearing housing 11 receives a large roller load, the sleeve 20 is deformed. As a result, the load is distributed, and thus the peak load is reduced.

To smoothly change the rigidity in the radial direction, it is preferable that such a sleeve 20 is formed in a shape in which the boundary line between the sleeve 20 and the bearing housing 11 smoothly changes. In other words, it is preferable that the shape of the sleeve 20 is adjusted such that a sudden change in shape, such as a stepped shape causing stress concentration, does not occur in the boundary line between the sleeve 20 and the bearing housing 11.

In the bearing back surface region in which the analyzed rolling element load in consideration of deformation of the bearing structure is greater than the calculated theoretical value in which no structure deformation is considered, the sleeve 20 of the rigidity-adjusting section SA which causes the support rigidity in the radial direction from the bearing center to be further reduced in the region to which the greater analyzed rolling element load is applied is provided, as described above. Accordingly, the support rigidity in the radial direction from the bearing center is reduced in the vicinity of a position at which the radial load acting on the casing body 15 has a peak value, and thus the load can be distributed over the vicinity of the position. As a result, the peak value of the radial load is reduced, and thus the load carried by the rollers 15 disposed in respective rows can be equalized.

Meanwhile, the rigidity-adjusting section SA described above is not limited to the sleeve 20 described above. Various modification examples can be applied.

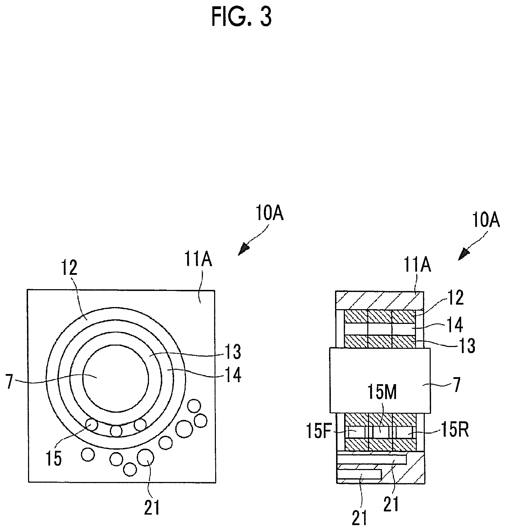

In a bearing 10A illustrated in Fig. 3, a hole 21 in the shaft direction is provided in a bearing housing 11A, as a gap portion as the rigidity-adjusting section SA of the first modification example.

The hole 21 causes the ratio of a space to a cross-sectional surface of the bearing housing 11A in the radial direction to be changed in the shaft direction and the circumferential direction, in accordance with the analyzed rolling element load. In a single or a plurality of holes 21, the diameter of the hole, the number of holes, the arrangement of the holes (in other words, the density of holes), and the like are appropriately adjusted. In other words, in the cross-sectional surface of the bearing housing 11A in the radial direction, when the diameter of the hole 21 is increased or the number of holes is increased, the ratio of a space to the cross-sectional surface in the radial direction is increased. Accordingly, the support rigidity in the radial direction from a shaft center is reduced. Thus, the peak value of the radial load is reduced due to load distribution, similar to the embodiment described above. As a result, the load carried by the rollers 15 disposed in the respective rows can be equalized.

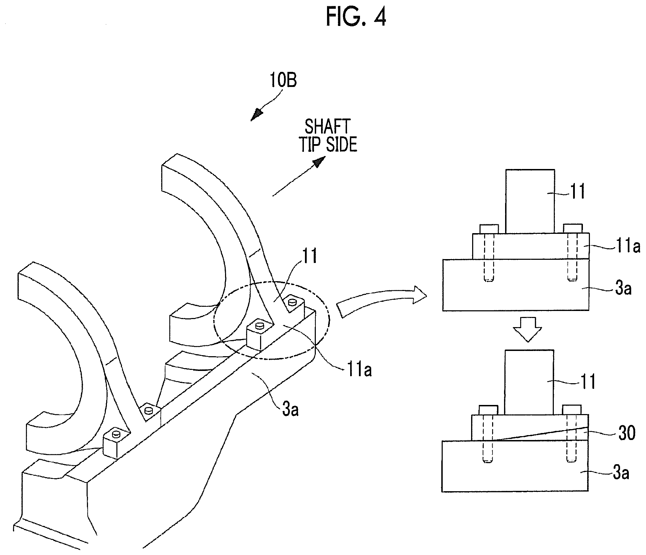

Next, in a bearing 10B of a second modification example, which is illustrated in Fig. 4, the rigidity-adjusting section SA is provided in a portion between the bearing housing 11 and the nacelle base plate 3a of the nacelle 3, which is a bearing housing support member.

In other words, the rigidity-adjusting section SA of the second modification example is formed of a material of which the Young's modulus is lower than that of the bearing housing 11. The rigidity-adjusting section SA of the second modification example is a shim 30 which is fitted to the portion between the bearing housing 11 and the nacelle base plate 3a. Upon comparison with a structure (see the upper-stage cross-sectional view of a principal portion) of the related art in which the bearing housing 11a and the nacelle base plate 3a are in contact over a front surface, a configuration example illustrated in the accompanying drawing has a structure (see the lower-stage cross-sectional view of a principal portion) in which the shim 30 of which the thickness is large on the shaft tip side is additionally provided in a state where the shim 30 is fitted to the portion between a flange portion 11a of the bearing housing 11 and the nacelle base plate 3a. Since the bearing housing 11 is generally formed of cast iron, for example, a resin, a casting, an aluminum alloy, and a copper alloy are suitable as a preferable material of the shim 30.

The thickness of the shim 30 in the shaft direction is changed in accordance with the analyzed rolling element load, in such a manner that the support rigidity of the case described above may be changed, similar to in the case of the sleeve 20 described above. As a result, the support rigidity of the bearing housing 11 is reduced in the shaft direction and the bearing housing 11 is inclined, in such a manner that axial load in relation to the rollers 15 can be equalized.

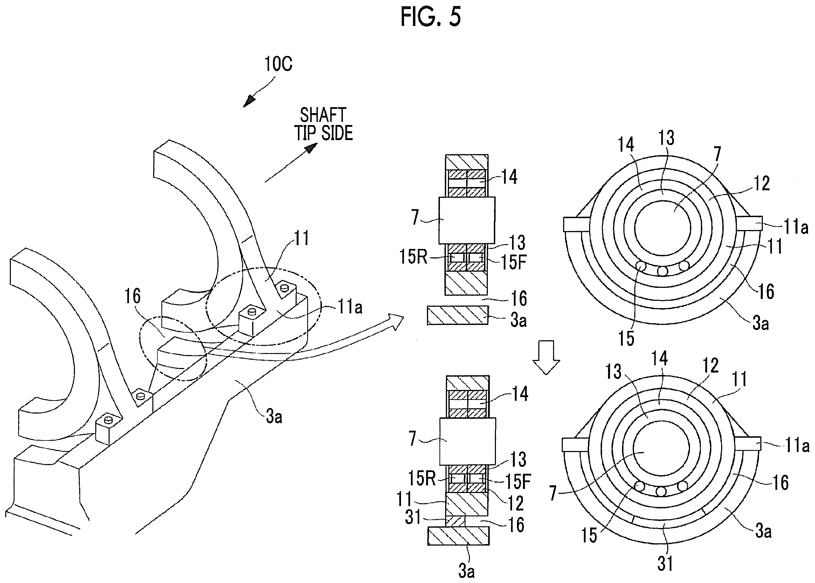

Next, the rigidity-adjusting section SA which fills up a space portion 16 formed in the portion between the bearing housing 11 and the nacelle base plate 3a as a bearing housing support member is provided in a bearing 10C of a third modification example illustrated in Fig. 5.

In other words, the rigidity-adjusting section SA of the third modification example is a load transfer member 31 which fills up the space portion 16.

In this case, the load transfer member 31 is provided on a rolling element row side of the rollers 15, in which the amount of the analyzed rolling element load is small, in such a manner that the adjustment of the support rigidity by the load transfer member 31 is performed.

In a configuration example illustrated in the accompanying drawing, in a multiple-row roller bearing in which two rows constituted of a front-side roller 15F and a rear-side roller 15R are provided, the amount of the analyzed rolling element load acting on the front-side roller 15F on the shaft tip side which receives a downward radial load is larger than the other. Accordingly, the load transfer member 31 is provided in a state where the load transfer member 31 fills up only the space portion 16 which is formed below the rear-side roller 15R.

Accordingly, the rolling element row side of the rear-side roller 15R, in which the space portion 16 is filled with the load transfer member 31, and thus the space portion 16 is removed. As a result, the support rigidity in the radial direction from the bearing center is increased in the rolling element row side of the rear-side roller 15R. Thus, a difference in a load carried by respective rolling element rows can be reduced.

Furthermore, such a load transfer member 31 does not necessarily fill up the entirety of the space portion 16 in the circumferential direction. The load transfer member 31 may fill up a selected region (in other words, a region just below the shaft center position and the vicinity of the region) in which the influence of the radial load is particularly large.

### <Second Embodiment>

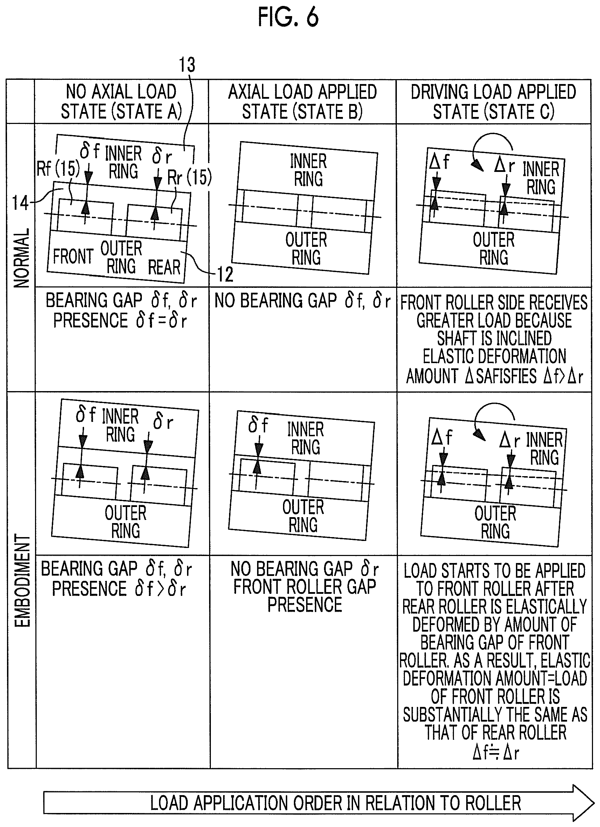

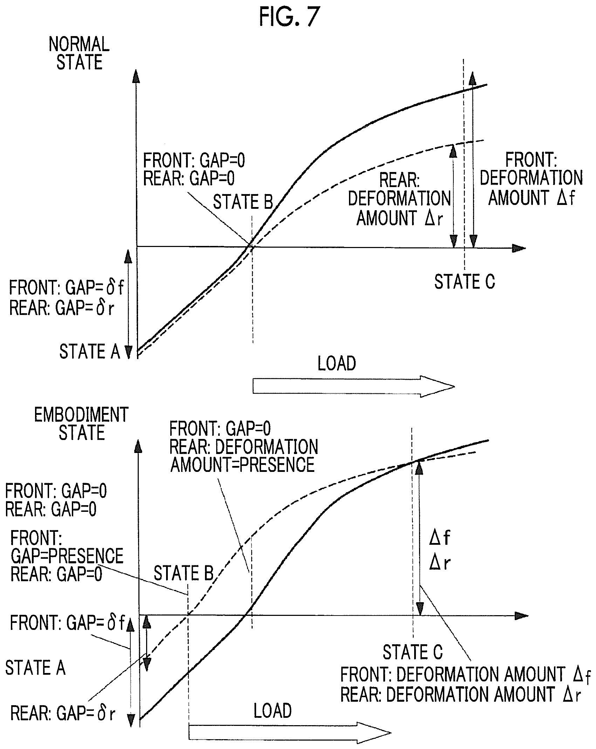

Hereinafter, a bearing structure which is applied to a main bearing of the wind turbine generator 1 described above, which supports a main shaft, is exemplified. The detail of the bearing structure is described with reference to Figs. 6 and 7.

A gap in the bearing main body is adjusted, in such a manner that the embodiment equalizes load distribution of a roller load applied to respective rows constituting a multiple-row roller bearing.

The embodiment is applied to, for example, a multiple-row roller bearing having a bearing structure in which the shaft tip side of the main shaft 7 receives the radial load and the rollers (in other words, rolling elements) 15 of multiple rows in the shaft direction, which are interposed between the inner ring 13 and the outer ring 12 and are provided in the circumferential direction, are provided.

In the following description, a multiple-row roller bearing which includes a rollers of two axially aligned front and rear rows, which are the front-side roller 15F (which is a member of reference letters Rf in Fig. 6) and the rear-side roller 15R (which is a member of reference letters Rr in Fig. 6) aligned in the shaft direction is exemplified. However, the embodiment can be applied to a multiple-row roller bearing in which rollers 15 of three or more rows are provided. Furthermore, the embodiment can also be applied to a configuration in which a plurality of roller bearings, each of which has the rollers 15 of one row, are aligned in the shaft direction.

The gap in the bearing main body is adjusted as follows. At least one of the diameter of the roller 15, the outer diameter (in other words, a raceway diameter of the inner ring) of the inner ring 13, and the inner diameter (in other words, a raceway diameter of the outer ring) of the outer ring 12 is selected and changed, in such a manner that the bearing radial gap δ is adjusted for each row of the rollers 15. In the adjustment, the value of the bearing radial gap δ is set to be larger in a row in which a grater load acts on the rollers 15.

Specifically, to increase the gap δ, there are several choices which are reduction in the diameter of the rollers 15, reduction in the outer diameter of the inner ring 13, and increase in the inner diameter of the outer ring 12. When at least one of the choices is performed, the gap δ is increased. In addition, to reduce the gap δ, there are several choices which are increase in the diameter of the rollers 15, increase in the outer diameter of the inner ring 13, and reduction in the inner diameter of the outer ring 12. When at least one of the choices is performed, the gap δ is reduced.

The detail of the adjustment of the gap will be described with reference to the accompanying drawings.

Fig. 6 illustrates the bearing radial gap δ, which is on the lower side of the main shaft 7. In Fig. 6, the upper stage illustrates a general example (in other words, an example of the related art) and the lower stage illustrates the embodiment (of the invention). In Fig. 7, the gaps δ and the deformation amounts Δ of the front-side roller Rf and the rear-side roller Rr, in accordance with change in the load (shown in a horizontal axis) are shown in a vertical axis. In Fig. 7, an upper stage illustrates a normal state and a lower stage illustrates the state of the embodiment.

First, the normal state will be described. In a state (in other words, a state A) in which no axial load is applied, the front-side roller Rf and the rear-side roller Rr are located in a wall surface forming the inner diameter of the outer ring 12. In addition, the bearing radial gap δ of the front-side roller Rf is set to δf and the bearing radial gap δ of the rear-side roller Rr is set to δr.

Next, in a state (in other words, a state B) in which the axial load is applied, both the front-side roller Rf and the rear-side roller Rr come into contact with the outer ring 12 and the inner ring 13, and thus the value of the bearing radial gap δ is set to 0 (δf=0, δr=0). Next, in a state (in other words, a state C) where a load during driving is applied, the main shaft 7 is inclined by the radial load, and thus the amount of the load applied to the front-side roller Rf is greater than that of the rear-side roller Rr. As a result, in terms of an elastic deformation amount Δ, Δf on the front side is set to be greater than Δr on the rear side (Δf>Δr). In other words, the amount of the roller load (in other words, the axial load) carried by the front-side roller Rf is greater than that of the rear-side roller Rr.

However, in a case where the value of the bearing radial gap δf of the front-side roller Rf by which a greater axial load is carried in a state (in other words, the state A) where there is no axial load is set to be greater (δf>δr) than the bearing radial gap δr of the rear-side roller Rr, as illustrated in the embodiment, when the state A is changed to the state (in other words, the state B) where the axial load is applied, only the rear-side roller Rr comes into contact with the outer ring 12 and the inner ring 13. Thus, the value of the bearing radial gap δr becomes 0 before the value of the bearing radial gap δf becomes 0.

When such a state is changed to the state (in other words, the state C) where a load during driving is applied, first, the load applied to the bearing acts on the row of the rear-side rollers Rr. Then, when the amount of elastic deformation of the rear-side roller Rr becomes a difference (Δr=δf-δr) in gap, which is set in relation to the front-side roller Rf, the front-side roller Rf also starts, at this time, to receive the load. As a result, the amount of the load carried by the rear-side roller Rr and the amount of the load carried by the rear-side roller Rr are substantially equalized. Thus, in terms of the elastic deformation amount Δ in the state (in other words, the state C) where the load during driving is applied, Δf on the front side is also set to be substantially the same (Δf≅Δr) as Δr on the rear side.

According to such a bearing structure, at least one of the diameter of the roller 15, the outer diameter of the inner ring 13, and the inner diameter of the outer ring 12 is selected and changed, in such a manner that the bearing radial gap δ is adjusted for each row of the rollers 15. A plurality of the rows are provided in the shaft direction. In addition, the value of the bearing radial gap δ is set to be larger in a row in which a grater load acts on the rollers 15, and thus the roller 15 in a row of which the bearing radial gap δ is small receives a load before the roller 15 in a row of which the bearing radial gap δ is large receives a load. As a result, in the row which receives the load and has a relatively small bearing radial gap δ, the roller 15 is elastically deformed by only the amount filling a difference in the gap, and then the roller 15 in the row having a relatively large bearing radial gap δ also receives the load. Thus, load distribution in relation to the rolling element rows in the shaft direction is improved.

According to the embodiments described above and the modification examples thereof, the bearing structure in which the shaft tip side receives a radial load and which is supported, in the shaft direction, by the rolling elements of multiple rows equalizes the load carried by rolling elements, such as rollers 15, disposed in respective rows, in such a manner that the bearing structure can reduce a peak value of the acting load, as described above. As a result, it is possible to prevent or suppress reduction in the life span of the bearing. In other words, it is possible to achieve even load distribution in the respective rows in the shaft direction and reduce a peak load, which are problems in terms of the use of multiple-row bearing.

Furthermore, when the bearing structures of the embodiments described above and the modification examples thereof are applied to, for example, the main shaft 7 of the wind turbine generator 1, a load carried by each row of the rolling elements are equalized and, further, the peak value of the acting load is reduced. As a result, reduction in the life span of the bearing is prevented or suppressed, and thus the bearing is excellent in reliability and durability.

Furthermore the invention is not intended to be limited to the embodiments described above.

### Reference Signs List

1: wind turbine generator
3: nacelle
3a: nacelle base plate
4: rotor head
5: wind turbine blade
7: main shaft
10, 10A∼10C: bearing
11, 11A: bearing housing
12: outer ring
13: inner ring
15: roller (rolling element)
15F: front-side roller
15R: rear-side roller
16: space portion
20: sleeve
21: hole
30: shim
31: load transfer member
SA: rigidity-adjusting section

## Claims

1. A bearing structure in which a shaft tip side receives a radial load and which is supported by a plurality of rolling elements (15) of multiple rows aligned in a shaft direction, which are provided in a circumferential direction in a state where the rolling elements (15) are interposed between an inner ring (13) and an outer ring (12),
wherein, in a bearing back surface region in which a value of an analyzed rolling element load in consideration of deformation of the bearing structure is greater than a calculated theoretical value in which no structure deformation is considered, a rigidity-adjusting section (SA) which causes support rigidity in a radial direction from a bearing center to be further reduced in a region to which the greater analyzed rolling element load is applied is provided,
the bearing structure being **characterized in that** the rigidity-adjusting section (SA) is a shim (30) which is formed of a material of which a Young's modulus is lower than that of a bearing housing (11) and is fitted to a portion between the bearing housing (11) and a bearing housing support member,
and **in that** a thickness of the shim (30) in the radial direction is changed in the shaft direction and in the circumferential direction, in accordance with the analyzed rolling element load, in such a manner that the support rigidity is adjusted.

2. A bearing structure in which a shaft tip side receives a radial load and which is supported by a plurality of rolling elements (15) of multiple rows aligned in a shaft direction, which are provided in a circumferential direction in a state where the rolling elements (15) are interposed between an inner ring (13) and an outer ring (12),
wherein, in a bearing back surface region in which a value of an analyzed rolling element load in consideration of deformation of the bearing structure is greater than a calculated theoretical value in which no structure deformation is considered, a rigidity-adjusting section (SA) which causes support rigidity in a radial direction from a bearing center to be further reduced in a region to which the greater analyzed rolling element load is applied is provided,
the bearing structure being **characterized in that** the rigidity-adjusting section (SA) is a load transfer member (31) which fills up a space portion (16) which is formed in a portion between a bearing housing (11) and a bearing housing support member, and
and **in that** the load transfer member (31) is provided on a rolling element (15) row side in which the analyzed rolling element load is small, in such a manner that the support rigidity is adjusted.

3. A wind turbine generator (1),
wherein at least one of a main bearing (10) which supports rotation of a rotor head (4) including a plurality of wind turbine blades (5), a pitch bearing which supports the wind turbine blade (5) and can change a pitch angle, and a yaw bearing which supports a nacelle (3) and can change a yaw angle has the bearing support structure according to any one of Claims 1 or 2.

## Patentansprüche

1. Lagerstruktur, in der eine Wellenspitzenseite eine Radiallast aufnimmt und die von mehreren Wälzelementen (15) in mehreren Reihen unterstützt wird, die in einer Wellenrichtung ausgerichtet sind, die in einer Umfangsrichtung in einem Zustand bereitgestellt sind, in dem die Wälzelemente (15) zwischen einem Innenring (13) und einem Außenring (12) eingefügt sind,
wobei in einer Lagerrückseitenregion, in der ein Wert einer analysierten Wälzelementlast unter Berücksichtigung einer Verformung der Lagerstruktur größer als ein berechneter theoretischer Wert ist, in dem keine Strukturverformung berücksichtigt ist, ein Steifigkeitseinstellungsabschnitt (SA) bereitgestellt ist, der bewirkt, dass eine Stützsteifigkeit in einer radialen Richtung von einem Lagermittelpunkt in einer Region weiter verringert wird, auf die die größere analysierte Wälzelementlast ausgeübt wird,
wobei die Lagerstruktur **dadurch gekennzeichnet ist, dass** der Steifigkeitseinstellungsabschnitt (SA) eine Unterlegscheibe (30) ist, die aus einem Material gebildet ist, dessen Young-Modul geringer als jener eines Lagergehäuses (11) ist, und an einen Abschnitt zwischen dem Lagergehäuse (11) und einem Lagergehäusestützelement angesetzt ist,
und dass eine Dicke der Unterlegscheibe (30) in radialer Richtung in Wellenrichtung und in der Umfangsrichtung derart geändert ist, dass die Stützsteifigkeit in Übereinstimmung mit der analysierten Wälzelementlast eingestellt ist.

2. Lagerstruktur, in der eine Wellenspitzenseite eine Radiallast aufnimmt und die von mehreren Wälzelementen (15) in mehreren Reihen unterstützt wird, die in einer Wellenrichtung ausgerichtet sind, die in einer Umfangsrichtung in einem Zustand bereitgestellt sind, in dem die Wälzelemente (15) zwischen einem Innenring (13) und einem Außenring (12) eingefügt sind,
wobei in einer Lagerrückseitenregion, in der ein Wert einer analysierten Wälzelementlast unter Berücksichtigung einer Verformung der Lagerstruktur größer als ein berechneter theoretischer Wert ist, in dem keine Strukturverformung berücksichtigt ist, ein Steifigkeitseinstellungsabschnitt (SA) bereitgestellt ist, der bewirkt, dass eine Stützsteifigkeit in einer radialen Richtung von einem Lagermittelpunkt in einer Region weiter verringert wird, auf die die größere analysierte Wälzelementlast ausgeübt wird,
wobei die Lagerstruktur **dadurch gekennzeichnet ist, dass** der Steifigkeitseinstellungsabschnitt (SA) ein Lastübertragungselement (31) ist, das einen Raumabschnitt (16) füllt, der in einem Abschnitt zwischen einem Lagergehäuse (11) und einem Lagergehäusestützelement gebildet ist, und
dass das Lastübertragungselement (31) an einer Seite einer Wälzelement- (15) Reihe, an der die analysierte Wälzelementlast gering ist, derart bereitgestellt ist, dass die Stützsteifigkeit eingestellt ist.

3. Windturbinengenerator (1),
wobei wenigstens eines von einem Hauptlager (10), das eine Drehung eines Rotorkopfs (4) mit mehreren Windturbinenschaufeln (5) unterstützt, einem Blattlager, das die Windturbinenschaufel (5) unterstützt und einen Neigungswinkel ändern kann, und einem Azimutlager, das eine Gondel (3) unterstützt und einen Gierwinkel ändern kann, die Lagerstützstruktur nach einem der Ansprüche 1 oder 2 aufweist.

## Revendications

1. Structure de palier dans laquelle un côté d'extrémité d'arbre reçoit une charge radiale et qui est supporté par une pluralité d'éléments de roulement (15) de multiples rangées alignées dans une direction d'arbre, qui sont prévues dans une direction circonférentielle dans un état où les éléments de roulement (15) sont interposés entre une bague intérieure (13) et une bague extérieure (12),
dans laquelle, dans une zone de surface arrière de palier dans laquelle une valeur d'une charge d'élément de roulement analysée compte tenu d'une déformation de la structure de palier est plus grande qu'une valeur théorique calculée dans laquelle aucune déformation de structure n'est considérée, est prévue une section d'ajustement de rigidité (SA) qui amène une rigidité de support dans une direction radiale par rapport à un centre de roulement à être davantage réduite dans une zone sur laquelle la charge d'élément de roulement analysée plus grande est appliquée,
la structure de palier étant **caractérisée en ce que** la section d'ajustement de rigidité (SA) est une cale (30) qui est formée dans une matière dont un module d'Young est inférieur à celui d'un logement de palier (11) et est montée sur une partie entre le logement de palier (11) et un élément de support de logement de palier,
et **en ce qu'**une épaisseur de la cale (30) dans la direction radiale est changée dans la direction d'arbre et dans la direction circonférentielle, en fonction de la charge d'élément de roulement analysée, d'une manière telle que la rigidité de support est ajustée.

2. Structure de palier dans laquelle un côté d'extrémité d'arbre reçoit une charge radiale et qui est supporté par une pluralité d'éléments de roulement (15) de multiples rangées alignées dans une direction d'arbre, qui sont prévues dans une direction circonférentielle dans un état où les éléments de roulement (15) sont interposés entre une bague intérieure (13) et une bague extérieure (12),
dans laquelle, dans une zone de surface arrière de palier dans laquelle une valeur d'une charge d'élément de roulement analysée compte tenu d'une déformation de la structure de palier est plus grande qu'une valeur théorique calculée dans laquelle aucune déformation de structure n'est considérée, est prévue une section d'ajustement de rigidité (SA) qui amène une rigidité de support dans une direction radiale par rapport à un centre de roulement à être davantage réduite dans une zone sur laquelle la charge d'élément de roulement analysée plus grande est appliquée,
la structure de palier étant **caractérisée en ce que** la section d'ajustement de rigidité (SA) est un élément de transfert de charge (31) qui remplit une partie d'espace (16) qui est formée dans une partie entre un logement de palier (11) et un élément de support de logement de palier, et
et **en ce que** l'élément de transfert de charge (31) est prévu sur un côté de rangée d'élément de roulement (15) dans lequel la charge d'élément de roulement analysée est faible, d'une manière telle que la rigidité de support est ajustée.

3. Eolienne (1),
dans laquelle au moins un d'un palier principal (10) qui supporte une rotation d'une tête de rotor (4) comprenant une pluralité de pales d'éolienne (5), un palier de pas qui supporte la pale d'éolienne (5) et peut changer un angle de pas, et un palier de lacet qui supporte une nacelle (3) et peut changer un angle de lacet a la structure de support de roulement selon l'une quelconque des revendications 1 ou 2.
